# EUROPÄISCHE PATENTANMELDUNG

(11) **EP 0 968 901 A2**
(43) Veröffentlichungstag der Anmeldung: **05.01.2000**
(21) Anmeldenummer: 99110071.0
(22) Anmeldetag: 22.05.1999
(51) Int. Cl.: B62D 1/18

(54) **Fahrfunktions-Bedieneinheit für Nutzfahrzeuge**

(30) Priorität: 01.07.1998 DE 19829351
(71) Anmelder: DaimlerChrysler AG, 70567 Stuttgart (DE)
(72) Erfinder: Diwo, Thomas, 76571 Gaggenau (DE); Kneitz, Udo, 63846 Laufach (DE); Kohrs, Christian, 59494 Soest (DE); Scholl, Detlef, 54347 Neumagen-Dhorn (DE); Weidele, Alois, Dr., 76879 Essingen (DE); Zeimetz, Leo, 64572 Büttelborn (DE)

(57) **Zusammenfassung**

Die Erfindung bezieht sich auf eine Fahrfunktions-Bedieneinheit (1) für ein Kraftfahrzeug, insbesondere ein Nutzfahrzeug, mit einer in Fahrzeugquerrichtung ausgerichteten fahrzeugfesten Linearführung (8), auf der ein ein Lenkungselement (2,15,16) tragender Führungsschlitten (17) zwischen einer linken und einer rechten Funktionsposition verschiebbar gelagert ist, sowie mit einem fahrzeugfest positionierten Abtrieb (29) zu einem Lenkgetriebe des Kraftfahrzeugs und mit Übertragungsmitteln (12,13,15) für eine Kraftübertragung zwischen Lenkungselement (2,15,16) und Abtrieb (29).

Wenigstens auf Höhe der linken und der rechten Funktionsposition ist jeweils eine fahrzeugfest positionierte Übertragungseinheit (12,13) vorgesehen, wobei jede Übertragungseinheit (12,13) permanent an den Abtrieb (29) gekoppelt ist, und wobei dem Lenkungselement (2,15,16) am Führungsschlitten (17) eine Kopplungsanordnung zugeordnet ist, die je nach der Position des Führungsschlittens (17) mit einer Übertragungseinheit (12,13) koppelbar ist.

Verwendung beispielsweise in kommunalen Geräteträgern.

## Beschreibung

Die Erfindung betrifft eine Fahrfunktions-Bedieneinheit für ein Kraftfahrzeug, insbesondere ein Nutzfahrzeug, mit einer in Fahrzeugguerrichtung ausgerichteten, fahrzeugfesten Linearführung, auf der ein eine Lenkungsanordnung tragender Führungsschlitten zwischen einer linken und rechten Funktionsposition verschiebbar gelagert ist, sowie mit einem fahrzeugfest positionierten Abtrieb zu einem Lenkgetriebe des Kraftfahrzeugs und mit Übertragungsmitteln für eine Kraftübertragung zwischen der Lenkungsanordnung und dem Abtrieb.

Für Nutzfahrzeuge sind solche verstellbaren Fahrfunktions-Bedieneinheiten bekannt, wodurch das übersichtliche Steuern des Fahrzeugs von beiden Fahrzeugseiten aus beim Betrieb von Arbeitsgeräten ermöglicht werden soll.

Die DE 42 40 448 C2 offenbart eine Lenkeinheit für Fahrzeuge und im Besonderen für Nutzfahrzeuge, die ein längs einer fahrzeugfesten Führungsbahn verschiebbares Lenkrad aufweist, das entlang der Führungsbahn in einstellbaren Lagen fixierbar ist. In allen Lagen der Lenkeinheit wird die Lenkbewegung mittels eines an der Lenksäule drehschlüssig befestigten Übertragungsrades auf einen entlang der Führungsbahn umlaufenden Zahnriemen übertragen. Ein weiteres Übertragungsrad setzt dann die Verstellbewegung des Zahnriemens in die Drehbewegung einer Lenkwelle um.

Aufgabe der Erfindung ist die Bereitstellung einer Fahrfunktions-Bedieneinheit der eingangs genannten Art für ein Kraftfahrzeug, insbesondere ein schweres Nutzfahrzeug, die einfach aufgebaut ist.

Diese Aufgabe wird dadurch gelöst, daß wenigstens auf Höhe der linken und der rechten Funktionsposition jeweils eine fahrzeugfest positionierte Übertragungseinheit vorgesehen ist, wobei jede Übertragungseinheit permanent an den Abtrieb gekoppelt ist, und wobei der Lenkungsanordnung am Führungsschlitten eine Kopplungsanordnung zugeordnet ist, durch die je nach Position des Führungsschlittens die Lenkungsanordnung mit einer Übertragungseinheit koppelbar ist.

Dadurch ist die Fahrfunktions-Bedieneinheit aufgrund ihres einfachen Aufbaus sehr robust und stabil gestaltet, wobei die fahrzeugfeste Positionierung der Übertragungseinheiten einen wartungsarmen Betrieb gewährleistet.

In Ausgestaltung der Erfindung ist die Kopplungsanordnung als manuell bedienbare mechanische Schnellkupplung gestaltet. Dies gestattet ein äußerst einfaches und schnelles Umsetzen der Lenkungsanordnung von der rechten zur linken Fahrzeugseite und umgekehrt.

In weiterer Ausgestaltung der Erfindung weist die Schnellkupplung eine manuell betätigbare Hebelvorrichtung auf, mittels der das wenigstens eine Lenkungselement mit der Übertragungseinheit koppelbar ist. Dadurch kann ein Fahrzeugführer mittels der Hebelvorrichtung das Lenkungselement einfach und schnell koppeln und entkoppeln.

In weiterer Ausgetaltung der Erfindung sind mit der Hebelvorrichtung form- oder kraftschlüssig wirksame Arretiermittel zur Festlegung des Führungsschlittens auf der fahrzeugfesten Linearführung gekoppelt. Die Hebelvorrichtung weist somit eine Doppelfunktion auf, indem sie neben der Kopplung der Lenkungsanordnung zusätzlich den Führungsschlitten in der jeweiligen Funktionsposition an der Linearführung sichert.

In weiterer Ausgestaltung der Erfindung ist eine Pedalanordnung für eine gemeinsame Verschiebbarkeit zusammen mit dem Führungsschlitten mit diesem verbunden ist. Auf diese Weise wird erreicht, daß wahlweise in der linken oder rechten Endposition alle zum Steuern eines Kraftfahrzeuges erforderlichen Fahrfunktionseinheiten bedient werden können.

In weiterer Ausgestaltung der Erfindung ist wenigstens eines der Pedale aus seiner Funktionsposition wegschwenkbar gelagert. Auf diese Weise wird erreicht, daß das wenigstens eine Pedal bei einer Verschiebung des Führungsschlittens an in der Bewegungsbahn befindlichen Bauteilen vorbeibeweglich ist.

In weiterer Ausgestaltung der Erfindung steht wenigstens eines der Pedale mit der Hebelvorrichtung derart in Wirkverbindung, daß es gemeinsam mit einer Entkopplung des wenigstens einen Lenkungselementes von der Übertragungseinheit aus seiner Funktionsposition in eine Übergangsposition bewegt wird. Dadurch weist die Hebelvorrichtung eine Dreifachfunktion auf, indem sie die Kopplung der Lenkungsanordnung, die Sicherung des Führungsschlittens und die Wegbewegung des wenigstens einen Pedales bewirkt.

Weitere Vorteile und Merkmale der Erfindung ergeben sich aus den Unteransprüchen sowie aus der Beschreibung eines bevorzugten Ausführungsbeispieles einer erfindungsgemäßen Fahrfunktions-Bedieneinheit, die anhand der Zeichnungen beschrieben ist.
- Fig. 1: zeigt in einer perspektivischen Darstellung aus Sicht einer Fahrerseite eine Ausführungsform einer erfindungsgemäßen Fahrfunktions-Bedieneinheit, wie sie zum Einbau in ein Nutzfahrzeug in Form eines insbesondere kommunalen Geräteträgers vorgesehen ist, und
- Fig. 2: eine weitere perspektivische Darstellung der Fahrfunktions-Bedieneinheit nach Fig. 1 aus entgegengesetzter Sicht.

Die Fahrfunktions-Bedieneinheit 1 umfaßt ein als Lenkungselement dienendes Lenkrad 2 zur Lenkung des Fahrzeugs und hat als Pedalanordnung ein Kupplungs-, Brems- und Gaspedal 3, 4, 5, mit denen die Fahrbewegungen eines Fahrzeugs mit Schaltgetriebe gesteuert werden können. Lenkrad und Pedalerie können entweder in einer linken oder rechten Endposition betrieben werden. Auf diese Weise eröffnet sich dem Fahrer wahlweise auf der linken oder rechten Seite des Fahrzeugs ein größeres Blickfeld - was beispielsweise zum übersichtlichen Betrieb eines Straßenreinigungsgerätes an dem kommunalen Geräteträger von Vorteil sein kann.

Die Fahrfunktions-Bedieneinheit 1 weist ein Gestell, das auf zwei Halterungen 6, 7 ruht, sowie ein Führungsrohr 8, zwei profilierte Übertragungswellen 9, 10 und ein Verbindungsrohr 11 auf, das mit Lagerböcken eines linken und eines rechten Winkelgetriebes 12, 13 verbunden ist, die als Übertragungseinheiten dienen. Dieses Gestell ist an den Halterungen 6, 7 zum Einbau in einen Führerstand eines Kraftfahrzeugs, insbesondere eines kommunalen Geräteträgers, quer zur Fahrzeuglängsachse vorgesehen. In dem Verbindungsrohr 11 ist eine Übertragungswelle drehbar gelagert, die mit den beiden Winkelgetrieben in Eingriff steht und die beiden Winkelgetriebe permanent miteinander koppelt. Zur Übertragung einer Drehbewegung weisen das linke und das rechte Winkelgetriebe 12, 13 jeweils ein nach oben ragendes Zahnritzel 14 auf.

Die Winkelgetriebe 12, 13 sind als Kegelzahnradgetriebe ausgebildet. Das linke und rechte Winkelgetriebe 12, 13 sind durch die Übertragungswelle, die im Inneren des Führungsrohres 11 aufgenommen ist, starr miteinander verbunden. Diese Übertragungswelle ist sehr steif ausgeführt, damit sie ein Drehmoment überträgt, ohne sich dabei zu verwinden. Im linken Winkelgetriebe 12 ist das Zahnritzel 14 nach unten über ein Kardangelenk 28 zu einem Abtrieb 29 an ein Lenkgetriebe durchverbunden.

Das Lenkrad 2 ist als Teil der gesamten Lenkungsanordnung mit einer drehbeweglichen Lenkspindel 15 in einer drehfesten Lenksäule 16 aufgenommen, die an einem Lenksäulenhalter 17 befestigt ist. Dieser Lenksäulenhalter 17 dient als Führungsschlitten. Er ist auf dem Führungsrohr 8 verschiebbar gelagert und kann zwischen zwei den Winkelgetrieben 12, 13 entsprechenden Endpositionen bewegt werden. Stabilisierungsarme 18, 19 stützen den Lenksäulenhalter 17 auf den profilierten Übertragungswellen 9, 10 ab. In der Lenksäule 16 ist die als Lenkungselement dienende Lenkspindel 15 axial beweglich geführt und über eine Kopplungsanordnung, die als mechanische Schnellkupplung gestaltet ist, an die Winkelgetriebe 12, 13 koppelbar. Dazu ist die Lenkspindel 15 an ihrem unteren Ende mit einer Verzahnungsbuchse versehen, die eine zu der Außenverzahnung der Zahnritzel 14 der Winkelgetriebe korrespondierende Innenverzahnung aufweist. Durch Heben und Senken der Lenkspindel 15 kann diese mit dem nach oben ragenden Zahnritzel 14 der Winkelgetriebe 12, 13 zum Kämmen gebracht werden. Die Schnellkupplung weist einen Betätigungshebel 21 und eine Schaltgabel 23 auf, die mit einem Hebelarm 22 eine Hebelvorrichtung bilden. Der Betätigungshebel 21 ist an der Lenksäule 16 schwenkbar um eine Achse 20 angebracht. Er dient zur Arretierung von Lenkrad und Pedalerie auf dem Führungsrohr 8 in entweder der linken oder der rechten Endposition, zum Heben und Senken der Lenkspindel und zum Hochschwenken von Kupplungs- und Gaspedal.

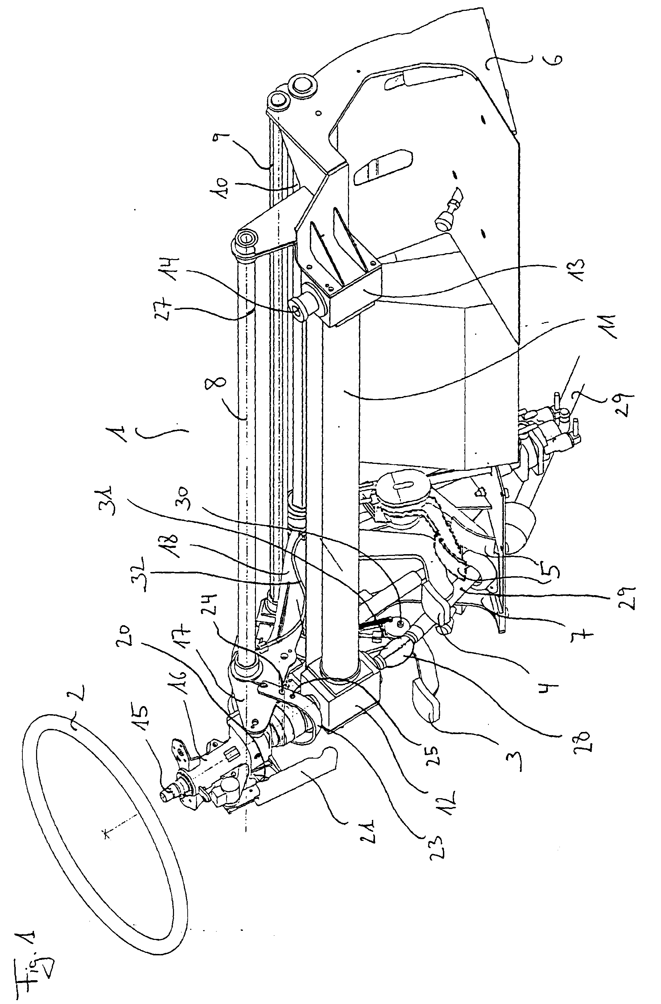

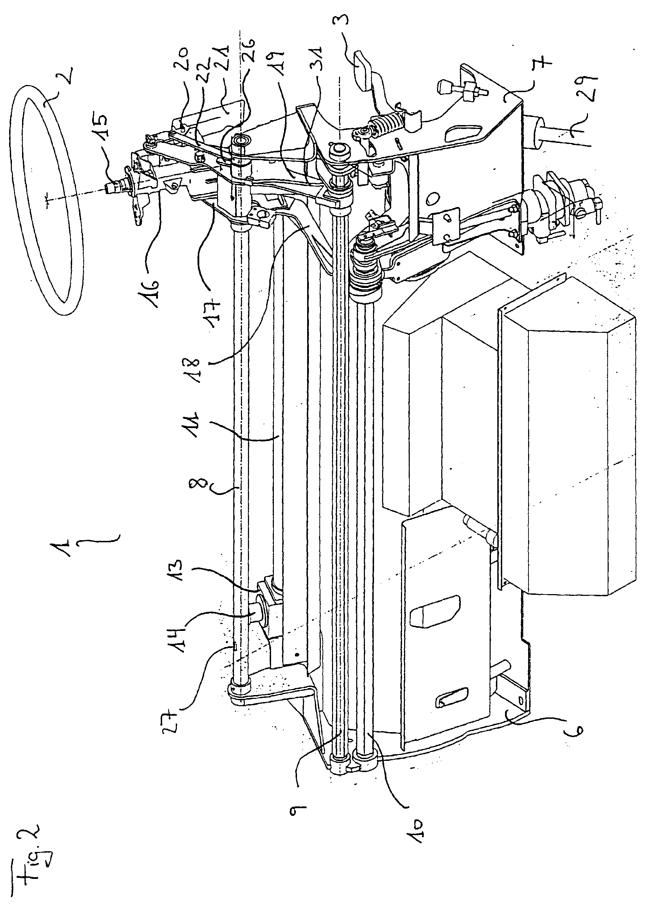

Fig. 1 und 2 zeigen den Betätigungshebel 21 in Schließstellung. Der Hebelarm 22 verbindet den Betätigungshebel 21 mit der bügelförmigen Schaltgabel 23. Durch Heben und Senken des Betätigungshebels 21 kann die Schaltgabel 23 um eine Achse 24 geschwenkt werden, die senkrecht zur Achse der Lenkspindel 15 nach hinten zurückversetzt verläuft. Die Schaltgabel 23 ist über zwei Lagerbolzen 25 derart schwenkbeweglich mit der Lenkspindel 15 oder ihrer Verzahnungsbuchse gekoppelt, daß eine Schwenkbewegung der Schaltgabel 23 ein Heben oder Senken der Lenkspindel 15 bewirkt.

Die Schaltgabel 23 ist unsymmetrisch gestaltet und weist einen Gabelfortsatz 26 auf, der zur Arretierung des Lenksäulenhalters 17 auf dem Führungsrohr 8 in den gegenüberliegenden Endpositionen in Kerben 27 eingreift, sobald der Betätigungshebel 21 in Schließstellung ist. Die beiden Kerben 27 sind auf den Gabelfortsatz 26 derart abgestimmt, daß der durch den Lenksäulenhalter 17 gebildete Führungsschlitten in der Schließstellung des Betätigungshebels 21 formschlüssig blockiert ist.

Der Betätigungshebel 21 ist durch eine seriell in den Zündstromkreis des Fahrzeugs integrierte Schaltvorrichtung so vorverriegelt, daß er nur bei stehendem Fahrzeug und abgeschaltetem Motor gelöst werden kann.

Über die Stabilisierungsarme 18, 19 ist der Lenksäulenhalter 17 nach unten starr mit dem Kupplungs-, Brems- und Gaspedal 3, 4, 5 verbunden. Das Kupplungspedal 3 und das Bremspedal 4 sind auf den profilierten Übertragungswellen 9, 10 gelagert. Wird der Lenksäulenhalter 16 entlang dem Führungsrohr 8 verschoben, so bewegen sich die Pedale entlang der profilierten Übertragungswellen mit. Diese Übertragungswellen ermöglichen die Kraft- und Wegübertragung von den Pedalen zu einem Kupplungsgeberzylinder bzw. zu einem Bremsventil. Der Kupplungsgeberzylinder mit dem zugehörigen Lagerbock nebst Umlenkmechanismus und Ausgleichsfeder (Übertotpunktfeder) und das Betriebsbremsventil mit Lagerbock und Übertragungsstange werden somit nur in einfacher und nicht in doppelter Ausführung benötigt. Damit das Kupplungspedal 3 beim Verschieben am Abtrieb 29 zum Lenkgetriebe vorbeifahren kann, ist dieses um eine Achse 30 nach oben klappbar ausgeführt. Dabei ist ein Bowdenzug 31 als Zugmittel vorgesehen, der mit der Schaltgabel 23 verbunden ist und bewirkt, daß beim Öffnen des Betätigungshebels 21 das Kupplungspedal 3 aus einem Funktionspositionsbereich nach oben in eine Übergangsposition geschwenkt wird. Das Gaspedal 5 ist ebenfalls auf der Übertragungswelle 10 des Bremspedals 4 verschiebbar gelagert. Dieses Gaspedal 5 ist als Potentiometer ausgebildet, so daß zur Signalübertragung kein zusätzliches mechanisches Mittel vorzusehen ist. Auch das Gaspedal 5 kann, ähnlich wie das Kupplungspedal 3, aus einem Funktionspositionsbereich in eine in Fig. 1 gestrichelt dargestellte Übergangsposition gegen einen Schwenkhalter nach vorne oben geschwenkt werden. Um das Schwenken des Gaspedals 5 gemeinsam mit dem Öffnen des Betätigungshebels zu bewirken, ist entsprechend dem Kupplungspedal 3 ein als Bowdenzug 32 ausgebildetes weiteres Zugmittel mit der Schaltgabel 23 und dem Gaspedal 5 verbunden.

## Patentansprüche

1. Fahrfunktions-Bedieneinheit für ein Kraftfahrzeug, insbesondere ein Nutzfahrzeug, mit einer in Fahrzeugquerichtung ausgerichteten, fahrzeugfesten Linearführung (8), auf der ein eine Lenkungsanordnung (2, 15, 16) tragender Führungsschlitten (17) zwischen einer linken und einer rechten Funktionspositon verschiebbar gelagert ist, sowie mit einem fahrzeugfest positionierten Abtrieb (29) zu einem Lenkgetriebe des Kraftfahrzeugs und mit Übertragungsmitteln (12, 13, 15) für eine Kraftübertragung zwischen der Lenkungsanordnung (2, 15, 16) und dem Abtrieb (29),
**dadurch gekennzeichnet,**
daß wenigstens auf Höhe der linken und der rechten Funktionsposition jeweils eine fahrzeugfest positionierte Übertragungseinheit (12, 13) vorgesehen ist, wobei jede Übertragungseinheit (12, 13) permanent an den Abtrieb (29) gekoppelt ist, und wobei der Lenkungsanordnung (2, 15, 16) am Führungsschlitten (17) eine Kopplungsanordnung zugeordnet ist, durch die je nach der Position des Führungsschlittens (17) die Lenkungsanordnung (2, 15, 16) mit einer Übertragungseinheit (12, 13) koppelbar ist.

2. Fahrfunktions-Bedieneinheit gemäß Anspruch 1,
**dadurch gekennzeichnet,**
daß die Übertragungseinheiten (12, 13) als mechanische Winkelgetriebe gestaltet sind, die untereinander über eine starre Kopplungswelle permanent miteinander gekoppelt sind.

3. Fahrfunktions-Bedieneinheit gemäß Anspruch 1 oder 2,
**dadurch gekennzeichnet,**
daß wenigstens ein Lenkungselement der Lenkungsanordnung (2, 15, 16) zur An- oder Abkopplung mittels der Kopplungsanordnung quer zur Linearführung axial verschiebbar gelagert ist.

4. Fahrfunktions-Bedieneinheit gemäß einem der Ansprüche 1 bis 3,
**dadurch gekennzeichnet,**
daß die Kopplungsanordnung als manuell bedienbare mechanische Schnellkupplung (21, 23) gestaltet ist.

5. Fahrfunktions-Bedieneinheit gemäß Anspruch 4,
**dadurch gekennzeichnet,**
daß die Schnellkupplung (21, 23) eine manuell betätigbare Hebelvorrichtung aufweist, mittels der das wenigstens eine Lenkungselement mit der Übertragungseinheit (12, 13) koppelbar ist.

6. Fahrfunktions-Bedieneinheit gemäß Anspruch 5,
**dadurch gekennzeichnet,**
daß mit der Hebelvorrichtung form- oder kraftschlüssig wirksame Arretiermittel zur Festlegung des Führungsschlittens (17) auf der fahrzeugfesten Linearführung (8) gekoppelt sind.

7. Fahrfunktions-Bedieneinheit gemäß einem der vorigen Ansprüche,
**dadurch gekennzeichnet,**
daß eine Pedalanordnung (3, 4, 5) für eine gemeinsame Verschiebung zusammen mit dem Führungsschlitten (17) mit diesem verbunden ist.

8. Fahrfunktions-Bedieneinheit gemäß Anspruch 7,
**dadurch gekennzeichnet,**
daß wenigstens ein Brems- und ein Kupplungspedal der Pedalanordnung (4, 3) axial verschiebbar und drehschlüssig auf Übertragungswellen (9, 10) gehalten sind, die mit entsprechenden Fahrfunktionseinheiten in Verbindung stehen.

9. Fahrfunktions-Bedieneinheit gemäß wenigstens einem der vorhergehenden Ansprüche,
**dadurch gekennzeichnet,**
daß wenigstens eines der Pedale der Pedalanordnung (3, 4, 5) aus seiner Funktionsposition wegschwenkbar gelagert ist.

10. Fahrfunktions-Bedieneinheit gemäß Anspruch 9,
**dadurch gekennzeichnet,**
daß wenigstens eines der Pedale (3, 5) mit der Hebelvorrichtung (21, 22, 23) derart in Wirkverbindung steht, daß es gemeinsam mit einer Entkopplung des wenigstens einen Lenkungselementes (2) von der Übertragungseinheit (12, 13) aus seiner Funktionsposition in eine Übergangsposition bewegt wird.

11. Fahrfunktions-Bedieneinheit nach Anspruch 10,
**dadurch gekennzeichnet,**
daß das wenigstens eine Pedal (3, 5) zwischen der Funktionsposition und der Übergangsposition schwenkbeweglich gelagert ist, und daß die Hebelvorrichtung (21, 22, 23) mit dem wenigstens einen Pedal (3, 5) über jeweils ein Zugmittel, insbesondere einen Bowdenzug (31, 32), verbunden ist.
